(19)

**Europäisches Patentamt**
**European Patent Office**
**Office européen des brevets**

(11) **EP 4 730 274 A1**

(12) **EUROPEAN PATENT APPLICATION**

(43) Date of publication:
22.04.2026 Bulletin 2026/17

(21) Application number: 25189878.9

(22) Date of filing: 16.07.2025

(51) International Patent Classification (IPC):
*G06V 10/82* (2022.01)  *G06V 20/40* (2022.01)

(52) Cooperative Patent Classification (CPC):
**G06V 10/82; G06T 7/12; G06V 20/41**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.10.2024 US 202418920425**

(71) Applicant: **Lenovo (Singapore) Pte. Ltd.**
**New Tech Park 556741 (SG)**

(72) Inventors:
• **VU, Tran Minh Khuong**
**Yokohama-shi, 220-0012 (JP)**
• **NOMURA, Ryohta**
**Yokohama-shi, 220-0012 (JP)**

(74) Representative: **Openshaw & Co.**
**8 Castle Street**
**Farnham, Surrey GU9 7HR (GB)**

(54) **METHOD AND SYSTEM FOR CONTENT BOUNDARY DETERMINATION**

(57) Method and system for content boundary detection. Display data including a first content object is obtained. With an artificial intelligence detection model configured to detect content objects based on the display data, a set of bounding boxes is determined based on the display data. The set of bounding boxes includes a first bounding box related to the first content object. With an image processing system including one or more computer vision filters or functions that transform the display data, a set of contours is determined based on the display data. The set contours includes a first contour. A correspondence score for the first bounding box and the first contour is calculated. Based on the correspondence score it is determined that the first bounding box and the first contour correspond with each other. A content boundary of the first content object is determined based on the first contour.

```
Start
  │
  ▼
Obtain display data including a first content object  1202
  │
  ▼
Determine, with an artificial intelligence detection model, a set
of bounding boxes based on the display data, where the set of
bounding boxes includes a first bounding box related to the
first content object  1204
  │
  ▼
Determine, with an image processing system, a set of contours
based on the display data, where the set contours includes a
first contour  1206
  │
  ▼
Determine that the first bounding box and the first contour
correspond with each other  1208
  │
  ▼
Determine a content boundary of the first content object based
on the first contour  1210
  │
  ▼
Determine and adjust display settings for a display device
based on the content boundary of the first content object  1212
  │
  ▼
End
```

**FIG. 12**

EP 4 730 274 A1

**Description**

BACKGROUND

Display data can represent various content objects such as text and images to be displayed using a display device. For example, the display data can correspond to a webpage to be rendered using the display device, where the webpage includes one or more images and text blocks.

Determination of a boundary of a content object is important, for example, to adjust display settings of the display device, conserve or optimize power consumption of the display device, enhance rendering of the display data, or combinations thereof. Inaccurate content boundaries can introduce unwanted and distracting visual artifacts in the display rendering, obscure portions of one or more content objects, and reduce performance of a display device *(e.g.,* increased power consumption, poor display quality, *etc.).*

Various artificial intelligence detection models exist for detecting content objects of one or more content types (e.g., image type) and locating the detected content objects on a display, e.g., using bounding boxes. However, these artificial intelligence detection models often return inaccurate content boundaries. For example, an artificial intelligence detection method that locates content data using a rectangular bounding box cannot conform to content objects with non-rectangular boundaries. Accordingly, there exists a need accurately determine the boundaries of content rendered, or to be rendered, on a display.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In general, in one aspect, embodiments relate to a method for content boundary detection. The method includes obtaining display data including a first content object. The method further includes determining, with an artificial intelligence detection model configured to detect content objects based on the display data, a set of bounding boxes based on the display data. The set of bounding boxes includes a first bounding box related to the first content object. The method further includes determining, with an image processing system including one or more computer vision filters or functions that transform the display data, a set of contours based on the display data. The set contours includes a first contour. The method further includes calculating a correspondence score for the first bounding box and the first contour, and determining that the first bounding box and the first contour correspond with each other based on the correspondence score. The method further includes determining a content boundary of the first content object based on the first contour. The method further includes determining display setting for a display device based on the content boundary of the first content object and adjusting display settings of the display device to the determined display settings.

In general, in one aspect, embodiments relate to a computer system for content boundary determination. The computer system includes an artificial intelligence detection model configured to receive display data, detect content objects in the display data, and output a set of bounding boxes. The computer system further includes an image processing system configured to receive the display data and output a set of contours, where the image processing system includes one or more computer vision filters or functions that transform the display data. The computer system further includes a correspondence system configured to determine one or more correspondences between the set of bounding boxes and the set of contours. The computer system is configured to obtain the display data including a first content object. The computer system is further configured to determine, with the artificial intelligence detection model, the set of bounding boxes based on the display data, where the set of bounding boxes includes a first bounding box related to the first content object. The computer system is further configured to determine, with the image processing system, the set of contours based on the display data, where the set contours comprises a first contour. The computer system is further configured to calculate a correspondence score for the first bounding box and the first contour and determine, with the correspondence system, that the first bounding box and the first contour correspond with each other based on the correspondence score. The computer system is further configured to determine a content boundary of the first content object based on the first contour. The computer system is further configured to determine display settings for a display device based on the content boundary of the first content object and adjust display settings of the display device to the determined display settings.

BRIEF DESCRIPTION OF DRAWINGS

FIG. 1 depicts a display rendering display data including content objects in accordance with one or more embodiments of the disclosure.

FIG. 2 depicts a content boundary and bounding box of a content object in accordance with one or more embodiments of the disclosure.

FIG. 3 depicts a content boundary determination system in accordance with one or more embodiments of the disclosure.

FIG. 4 depicts display data processed with a content boundary determination system in accordance with one or more embodiments of the disclosure.

FIG. 5 depicts use of an artificial intelligence detection model in accordance with one or more embodiments of the disclosure.

FIG. 6 depicts a comparison of bounding boxes and content boundaries in accordance with one or more embodiments of this disclosure.

FIG. 7 depicts an image processing system in accordance with one or more embodiments of the disclosure.

FIG. 8 depicts use of an image processing system in accordance with one or more embodiments of the disclosure.

FIG. 9 depicts a flowchart in accordance with one or more embodiments of the disclosure.

FIG. 10 depicts calculation of correspondence scores between a set of bounding boxes and a set of contours in accordance with one or more embodiments of the disclosure.

FIG. 11 depicts determined content boundaries in accordance with one or more embodiments of the disclosure.

FIG. 12 depicts a method for determining a content boundary of a content object in display data in accordance with one or more embodiments of the disclosure.

DETAILED DESCRIPTION

Specific embodiments of the present disclosure will now be described in detail below with reference to the accompanying drawings. Like elements in the various figures are denoted by like reference numerals for consistency.
In the following detailed description of embodiments of the disclosure, numerous specific details are set forth to provide a more thorough understanding of the invention. However, it will be apparent to one of ordinary skill in the art that the invention may be practiced without these specific details. In other instances, well-known features have not been described in detail to avoid unnecessarily complicating the description.
Throughout the application, ordinal numbers (*e.g.,* first, second, third) may be used as an adjective for an element (*e.g.,* any noun in the application). The use of ordinal numbers is not intended to imply or create a particular ordering of the elements nor to limit any element to being only a single element unless expressly disclosed, such as using the terms "before," "after," "single," and other such terminology. Rather the use of ordinal numbers is to distinguish between the elements. By way of an example, a first element is distinct from a second element, and the first element may encompass more than one element and may succeed (or precede) the second element in an ordering of elements.
Embodiments disclosed herein generally relate to a content boundary determination system that can accurately and quickly (*e.g.,* in real time) detects the boundary of a content object displayed, or to be rendered or displayed, using a display.

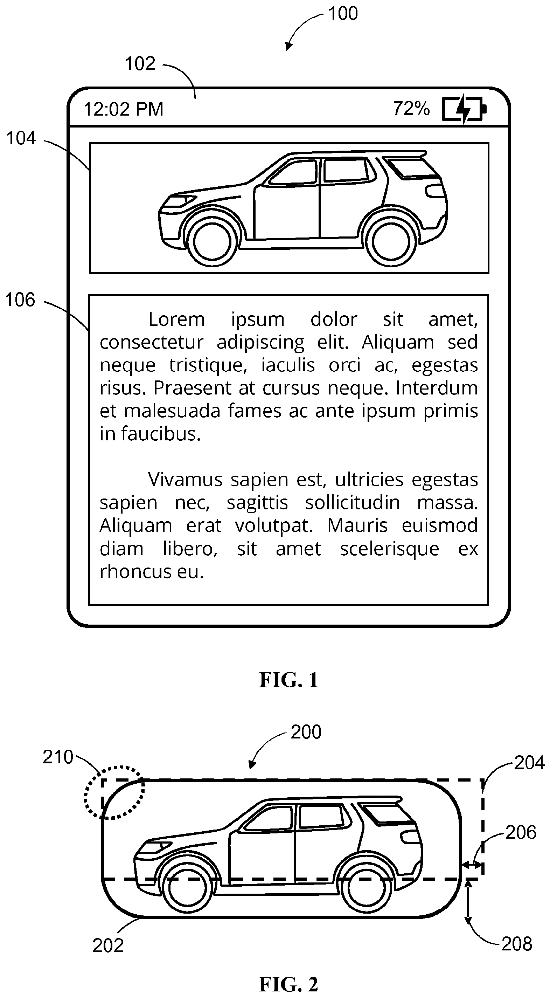

FIG. 1 depicts an example display (100). The display (100) can be part of a display device (not shown) such as a tablet, laptop, monitor, touchscreen, or other device. In FIG. 1, the display (100) shows a menu (102) including information for a user such as the current time and battery percentage of the display device. The display (100) is further used to render display data. Display data can include various content objects. Further, in some implementations, content objects are classified according to a content type. Examples of content type include, but are not limited to, an image type and a text type. Additional content types can include icons, navigation buttons, hyperlinks, *etc.* Two content objects are depicted in FIG. 1, namely, a first content object (104) and a second content object (106). The first content object (104) is an image and thus has a content type of an image type (or, more simply, an image). The second content object is text and has a content type of a text type (or, more simply, text). It is noted that the text depicted in the second content object (106) of FIG. 1 is placeholder text used to show the presence of text but does not have any meaning.
Detection of content objects and their location on a display can be important. For example, a display device including the display may adjust display settings of the display based on the content objects. Adjustment of display settings based on content objects can be beneficial for one or more of the following reasons: to selectively enhance display resolution based on the location of a content object; to reduce power consumption of the display (*e.g.,* preserve battery life of display device); to selectively alter the bit depth of pixels; to reduce latency; *etc.* For example, an area of a display pertaining to an image can be adjusted to have a greater resolution than an area of the display pertaining to text. Similarly, areas of a display can be set to color, grayscale, black and white, and movie modes based on the content object contained by the area. Further, the bit depth of pixels within an area of the display may be altered based on the content object within the area.

As an example, the display settings of the display device including the display (100) of FIG. 1 can be adjusted based the rendered content objects, or display data. In this example, the area of the display (100) pertaining to the first content object (104) is set to a high resolution, a high bit depth, and a color mode in response to the detection that the first content object (104) type is an image. Further, the area of the display (100) pertaining to the second content object (106) is set to a low resolution, a low bit depth, and a non-color mode in response to the detection that the second content object (106) type is text.

"Low" resolution and "low" bit depth are stated relative to the "high" resolution and "high" bit depth. In one or more embodiments, a color mode indicates that each pixel, or each effective pixel or discretized potion of the display, has three or four channels that, when viewed in aggregate, are visualized as a color. For example, three channels can correspond to the colors red, green, and blue. Further, in one or more embodiments, a "high" bit depth is 8 bits such that each pixel, effective pixel, or channel of a pixel can take on one of 256 values and a "low" bit depth is 1 bit corresponding to two possible values (*e.g.,* 0 or 1, black or white, *etc.).*

Keeping with the example of FIG. 1, the display settings are adjusted based on the content objects, and more specifically, the type and location of each content object. In the given example, the area of the display pertaining to the first content object (104) has one or more of a relatively high resolution and bit depth (*e.g.,* 8 bits), and is set to a color mode. The area of the display pertaining to the second content object has one more of a relatively low resolution and bit depth (*e.g.,* 1 bit), and is set to a black and white mode. In some instances, modes such as black and white or color may be fully specified by the bit depth. Using these display settings, the quality of the image contained by the first content object (104) can be retained while reducing the power consumption of the display device by not using more resolution, bit depth, and color than is required to render the text of the second content object (106).

Other adjustments of the display settings of a display device can be made based on the rendered, or to be rendered, content objects of the display data without departing from the scope of the instant disclosure. For example, areas of the display pertaining to a detected contact object *(e.g.,* an image) can be enhanced using a super resolution technique or method.

FIG. 2 depicts an example content object (200) with an image type. The example content object (200) can be the first content object (104) of FIG. 1. The actual boundary (202) of the example content object (200) on the display is represented in FIG. 2 with a solid line. Various artificial intelligence detection models exist for detecting a content object in a display (or display data) and outputting a location or area pertaining to the content object. A brief description of artificial intelligence models is provided later in the instant disclosure. An artificial intelligence detection model can detect images in display data and return, as output, a bounding box for each detected image. The bounding box encloses or segments the area of the display corresponding to the detected content object (*e.g.,* image). A bounding box need not be strictly a "box," or rectangular in shape. In some instances, an artificial intelligence detection model is configured to produce a regular or irregular polygon of a specified shape or type (*e.g.,* an irregular quadrilateral). A bounding box can be represented in a variety of ways. For example, in the cause of a rectangular bounding box, the bounding box can be represented by specifying the location in the display of two opposing corners (opposing in both a first and a second direction) such as the top-left corner and the bottom-right corner or by specifying the center of the bounding box along with the width and height of the bounding box.

In general, artificial intelligence detection models can quickly process display data to detect content objects rendered, or to be rendered, on a display according to one or more content types and return a representation of the area of the display (e.g., bounding box) pertaining to a detected content object. However, the area representations of the detected content objects returned by the artificial intelligence detection models is inexact. That is, bounding boxes, whether rectangular or another polygon, returned by the artificial intelligence detection models do not accurately conform to the boundaries of associated and detected content objects. FIG. 2 demonstrates an instance where an artificial intelligence detection model has detected the example content object (200) and generated a rectangular bounding box (204) representative of the area of the display corresponding to the example content object (200) according to the artificial intelligence detection method. As seen, the bounding box (204) does not accurately conform to the actual boundary (202) of the example content object (200). In the example of FIG. 2, the bounding box (204) extends beyond the actual boundary (202) on the right-hand side of the example content object (200) resulting in a margin (206). Additionally, the bounding box (204) does not span the full vertical extent of the example content object (200) resulting in a truncation (208), cut-off, or cropping of the example content object (200) on its bottom side. Further, the actual boundary (202) of the example content object (200) has rounded edges and the rectangular bounding box (204) has square corners resulting in an errant corner region (210) that is included by the bounding box (204) but is not part of the example content object (200).

Inaccurate boundaries of content objects can cause artifacts and defects in the display. As an example, display settings can be adjusted to enhance an area of the display *(e.g.,* increased resolution, increased bit depth, *etc.)* pertaining to a content object with an image type *(i.e.,* enhance the portion of the display containing an image). Such an enhancement applied to the example content object (200) of FIG. 2 based on the bounding box (204), as generated by an artificial intelligence detection model, can result in the margin (206) and corner region (210) being unnecessarily enhanced. This unnecessary enhancement can increase the power consumption of a display device including the display, cause one or more artifacts in the display such as a "halo effect" (bright or contrasting border) that distracts a user, among other things. Similarly, the truncation (208) can cause a portion of the example content object (200) to not be enhanced reducing its quality or viewability relative to the enhanced portion contained by the bounding box (204), if not completely obscuring the bottom portion of the example content object (200). Thus, embodiments disclosed herein generally relate to a content boundary detection system that accurately and quickly *(e.g.,* in real time) determines the actual boundary of a content object where the use of artificial intelligence detection models alone fail to accurately determine the boundaries of content objects.

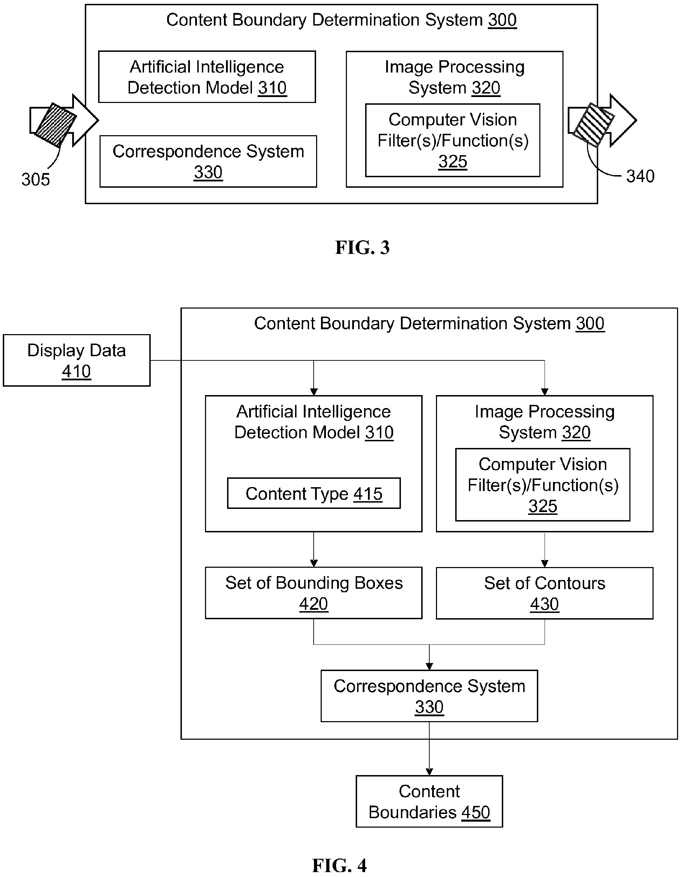

FIG. 3 depicts a block diagram of a content boundary determination system (300), in accordance with one or more embodiments. The content boundary determination system (300) includes an artificial intelligence detection model (310), an image processing system (320), and a correspondence system (330). As explained in greater detail below, the artificial intelligence detection model (310) and the image processing system (320) each, independently, process display data *(i.e.,* what is rendered or to be rendered to a display) and return area representations *(i.e.,* regions of the display) thought to correspond to content objects. Specifically, the artificial intelligence detection model (310) returns a set of bounding boxes where each bounding box in the set of bounding boxes relates to a content object detected by the artificial intelligence detection model (310) and the image processing system (320) returns a set of contours. The correspondence system (330) processes the set of bounding boxes and the set of contours to determine one or more content boundaries ("content boundaries"), where a content boundary represents the actual area or boundary of a detected content object.

In accordance with one or more embodiments, the content boundary determination system (300) receives display data of or for a display and returns content boundaries. FIG. 3 depicts the reception (305) of display data and the transmission (340) of the determined content boundaries. In one or more embodiments, the content boundary determination system (300) transmits (340) the content boundaries to another system or the display device including the display, for example, to adjust display settings of the display device based on the content boundaries. The another system can be a computer system. The computer system can be external to the content boundary determination system (300) or include the content boundary determination system (300). In some embodiments, the content boundary determination system (300) is used with a computer system, for example, operating a display device. The content boundary determination system (300) can be associated with a computer system by inclusion in the computer system or in electrical communication with the computer system. Thus, a determined content boundary or collection of determined content boundaries can be transformed to a command of the computer system. For example, the command can adjust display settings of a display device.

A computer system, as referenced herein, is intended to encompass any computing device such as a server, desktop computer, laptop computer, smart phone, personal data assistant (PDA), tablet computing device, one or more processors within these devices, or any other suitable processing device, including both physical or virtual instances (or both) of the computing device. The computer system can include one or more auxiliary devices, for example, to receive inputs and process or display outputs. Auxiliary devices can include a keypad, keyboard, touch screen, or other input device that can accept user information (e.g., joystick). Auxiliary devices can further include a display or other output device that conveys information associated with the operation of the computer system, including digital data, visual, or audio information (or a combination of information), or a graphical user interface. Thus, in some instances, a computer system includes a display device.

A computer system includes one or more computer processors and data storage such as one or more of a non-persistent storage *(e.g.,* volatile memory, such as random access memory (RAM), cache memory) and a persistent storage *(e.g.,* a hard disk, an optical drive such as a compact disk (CD) drive or digital versatile disk (DVD) drive, a flash memory, *etc.).* The processor may be part or all of an integrated circuit for processing instructions. For example, the processor may be or include one or more cores or micro-cores. The computer system can further include a communication interface, which may include an integrated circuit for connecting to a network *(e.g.,* a local area network (LAN), a wide area network (WAN) such as the Internet, mobile network, or any other type of network) and/or to another device.

In some embodiments, the content boundary determination system (300), or elements thereof, are stored on a non-transitory machine-readable medium and the processes or steps of the content boundary determination system (300) are executed using one or more computer processors. The non-transitory machine-readable medium can include, or be included in, the data storage of a computer system. That is, in instances where the content boundary determination system (300) of FIG. 3 is used in or with a computer system such as a display device, the content boundary determination system (300) may be encompassed, in terms of hardware and/or functionality, by the computer system.

FIG. 4 depicts the content boundary determination system (300) in greater detail, in accordance with one or more embodiments. As depicted in FIG. 4, the content boundary determination system (300) receives and processes display data (410) where the display data (410) includes content objects rendered, or to be rendered, on a display. The display data is processed by both the artificial intelligence detection model (310) and the image processing system (320), independently.

The artificial intelligence detection model (310) is configured to detect content objects of a display and return a set of bounding boxes (420) including a bounding box for each detected content object. In one or more embodiments, the artificial intelligence detection model (310) is further configured to detect content objects and return associated bounding boxes for one or more given content types (*e.g.,* image type). That is, the artificial intelligence detection model (310) can be configured according to a content type (415). For example, the artificial intelligence detection model (310) can be configured to detect images rendered, or to be rendered, on a display (detection of image type content objects). In this example, a bounding box is returned (in the set of bounding boxes (420)) by the artificial intelligence detection model (310) for each image detected in the display data.

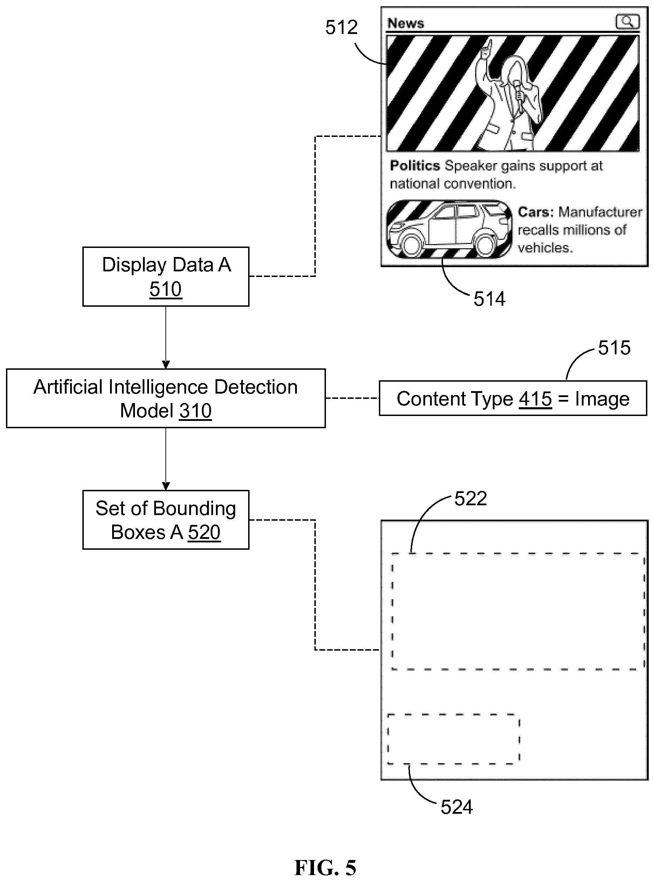

FIG. 5 depicts an example of an artificial intelligence detection model (310) that processes display data (*e.g.,* Display Data A (510)) and returns a set of bounding boxes (*e.g.,* Set of Bounding Boxes A (520)). In particular, FIG. 5 depicts the artificial intelligence detection model (310) processing an example instance of display data referenced as Display Data A (510). Further, in the example of FIG. 5, the artificial intelligence detection model (310) is specified as being configured to detect images (515) (*i.e.,* content type (415) is images). As seen, Display Data A (510) is that of a webpage of a news site and contains two images, namely, a first image (512) and a second image (514). The cross-hatching used in the images (512, 514) of Display Data A (510) is used herein to indicate that the display data is in color or contains colored portions (*e.g.,* the first and second images (512, 514) are color images). The artificial intelligence detection model (310), processing the display data (*e.g.,* Display Data A (510)), detects content objects (*e.g.,* images) and returns a set of bounding boxes (e.g., Set of Bounding Boxes A (520)). As seen in the example of FIG. 5, the Set of Bounding Boxes A (520) includes two bounding boxes, namely, a first bounding box (522) and a second bounding box (524). Each bounding box in the set of bounding boxes (420) may be said to relate to a content object in the display data (410). For example, in FIG. 5, the first bounding box (522) relates to the first image (512) and the second bounding box (524) relates to the second image (514). That is, a bounding box provides an approximate location, region, or area representation of a content object in display data. In accordance with one or more embodiments, the artificial intelligence detection model (310) detects content objects and provides an approximate area representation (*e.g.,* boundary box) and the boundaries of the detected content objects are determined using the image processing system (320) and correspondence system (330).

In one or more embodiments, the artificial intelligence detection model (310) is based on the You Only Look Once (YOLO) object detection model. Various versions of YOLO exist and differ in such things as the types of layers used, resolution of training data, *etc.* However, a defining trait of all YOLO versions is that multiple objects (*e.g.,* content objects) of varied scales can be detected in a single pass. Further, recent YOLO architectures partition input display data into grid cells and the grid cells each have one or more associated anchor boxes that are used as potential bounding boxes. A brief summary of artificial intelligence and common or applicable model types is provided later in the instant disclosure. The artificial intelligence detection model (310) can further encompass various pre- and post-processing steps such as normalization of the pixel values of display data, cropping, *etc.*

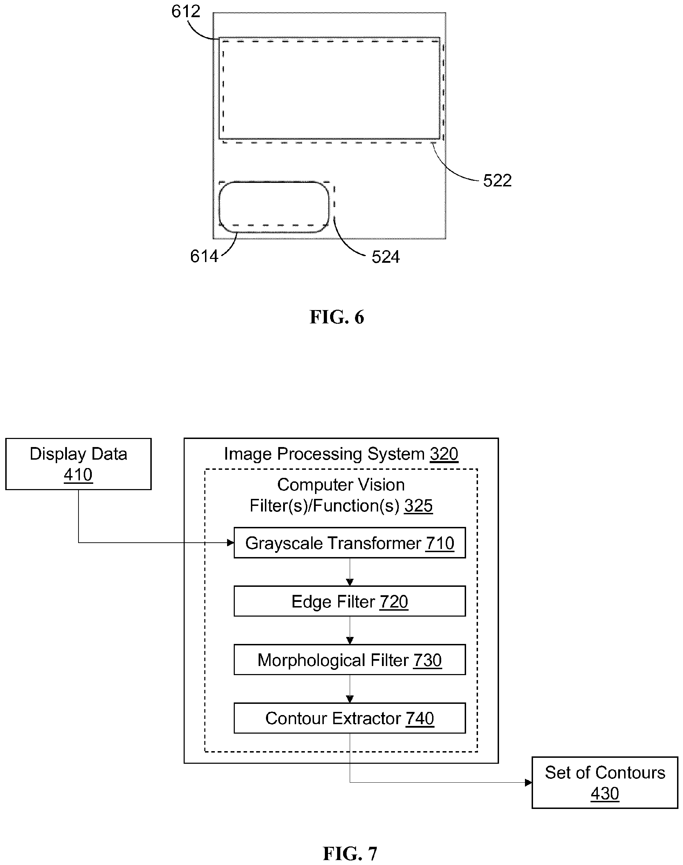

Keeping with the example of FIG. 5, FIG. 6 depicts the first bounding box (522) and the second bounding box (524) of the Set of Bounding Boxes A (520) along with the actual boundaries of the first image (512) and the second image (514) of Display Data A (510). The actual boundary (or true boundary or ground truth boundary) of the first image (512) is referenced in FIG. 6 as the first example boundary (612) and the actual boundary of the second image (514) if referenced in FIG. 6 as the second example boundary (614). As seen, the first bounding box (522) does not accurately conform to the first example boundary (612). Similarly, the second bounding box (524) does not accurately conform to the second example boundary (614). Thus, adjustments to display settings, for example, to alter the resolution or bit depth of regions of the display, based on the inaccurate bounding boxes (522, 524) can result in artifacts (*e.g.,* halo effect) or defects (*e.g.,* truncated image) appearing in the display.

Returning the FIG. 4, the display data (410) is processed by the image processing system (320) of the content boundary determination system (300). The image processing system (320), having processed the display data, returns a set of contours. A contour accurately represents the actual boundary of a related content object. The image processing system (320) includes one or more computer vision filters or functions (325) that alter or otherwise apply a transformation to an input image, *e.g.,* the display data. A computer vision filter or function includes the concepts of both image filtering and image warping, where image filtering changes the range (*i.e.,* the pixel values) of an image (*e.g.,* colors of the image are altered without changing the pixel positions) and image warping changes the domain (*i.e.,* the pixel positions) of an image (*e.g.,* points are mapped to other points without change in color). Computer vision filters or functions are used to modify or enhance image properties and/or to extract valuable information from the images. Computer vision filters and functions can include convolutional operations with different kernels, edge detection, thresholding, morphological filters or operations such as dilation and erosion, among others. In the context of computer vision filters and functions (325) the display data (410) may be considered an image for image processing.

FIG. 7 depicts the image processing system (320) in accordance with one or more embodiments. As seen in FIG. 7, the image processing system applies an ordered set, or sequence, of computer vision functions or filters (325). In accordance with one or more embodiments, the computer vision functions or filters (325) of the image processing system (320) include a greyscale transformer (710), an edge filter (720), a morphological filter (730) including one or more morphological operations, and a contour extractor (740). In one or more embodiments, the order of the computer vision functions or filters (325) is as depicted in FIG. 7. That is, the display data (410) is first processed by the greyscale transformer (710). Then, the output of the greyscale transformer (710) is processed by the edge filter (720). Then, the output of the edge filter (720) is processed by the morphological filter (730). Then, the output of the morphological filter (730) is processed by the contour extractor (740) and the output of the contour extractor is the set of contours (430).

The greyscale transformer (710) removes color, if present, from its input and outputs a version of the input that only uses a range of gray shades from white to black. Various method for converting color data to greyscale exist and any known method may be used by the greyscale transformer (710). Typically, these methods calculate greyscale values to preserve the luminance of the original color input.

The edge filter (720) identifies edges in its input. The edge filter (720) can use one or mathematical methods to identify edges in the input including search-based and zero-crossing based methods. A search-based method can detect edges by first computing a measure of edge strength such as a gradient magnitude and then searching for local maxima of the edge strength. A zero-crossing based method generally applies second-order derivative expression to the input (*e.g.,* pixels) and then searches for zero-crossings to detect a location of an edge. The edge filter (720) can also apply one or more pre-processing steps to its inputs such as smoothing or noise reduction step (*e.g.,* Gaussian filter). In one or more embodiments, the edge filter (720) is a Canny edge detector.

The morphological filter (730) applies one or more operations to its input where, in general, each operation adjusts the values of pixels of the input based on the values of nearby pixels. These operations are based on shape. Morphological operations can include, but are not limited to, erosion (to disconnect connected objects), dilation (to grow foreground pixels), opening (erosion and then dilation to remove small foreground objects), and closing (dilation and then erosion to remove small holes). In one or more embodiments, the morphological filter (730) applies a closing operation to its input. The closing operation improves continuity of contours, *e.g.,* by connecting sections of a contour disconnected by a small number of pixels, aiding the contour extraction process described below.

The contour extractor (740) determines and returns boundaries of objects (*e.g.,* content objects) in its input. The contour extractor (740) can apply one or more mathematical concepts or an algorithm to detect and extract contours. For example, mathematics defines a convex hull of a set of points as the smallest convex polygon that encloses all of the points in the set. Thus, a convex hull can be used to calculate vertices of a contour. As another example, the journal article "Topological structural analysis of digitized binary images by border following" by Satoshi Suzuki and KeiichiA be details an algorithm for contour extraction (See Computer Vision, Graphics, and Image Processing, Volume 30, Issue 1, 1985, Pages 32-46, ISSN 0734-189X). In one or more embodiments, the contour extractor (740) applies, or is based on, the algorithm of Satoshi Suzuki and KeiichiA be.

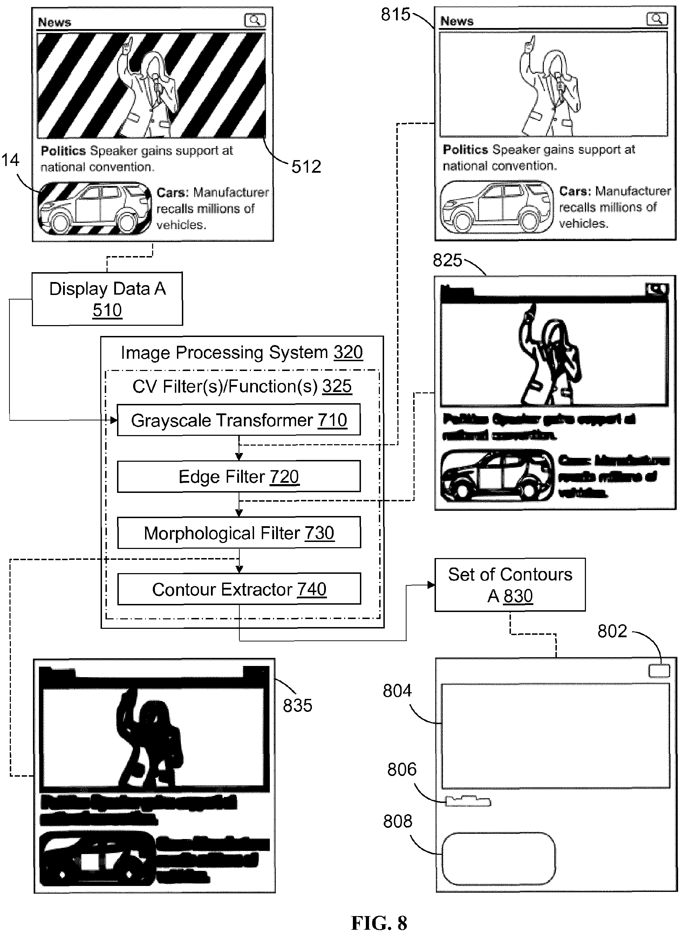

FIG. 8 depicts an example of an image processing system (320) that processes display data (*e.g.,* Display Data A (510)) and returns a set of contours (*e.g.,* Set of Contours A (830)). In particular, FIG. 8 depicts the image processing system (320) processing an example instance of display data referenced as Display Data A (510). Further, in the example of FIG. 8, the image processing system (320) is specified as including a greyscale transformer (710), an edge filter (720), a morphological filter (730), and a contour extractor (740) as the one or more computer vision (CV) filters or functions (325). Additionally, FIG. 8 depicts the order that the one or more CV filters or functions (325) are applied.

As seen in FIG. 8, Display Data A (510) is that of a webpage of a news site and contains two images, namely, a first image (512) and a second image (514). The cross-hatching used in the images (512, 514) of Display Data A (510) is used herein to indicate that the display data is in color or contains colored portions (*e.g.,* the first and second images (512, 514) are color images).

Keeping with FIG. 8, the example image processing system (320) receives the display data (*e.g.,* Display Data A (510)) and applies the greyscale transformer (710) to the display data (*e.g.,* Display Data A (510)). The output of the greyscale transformer (710) is referred to as the greyscale transformer output (*e.g.,* Greyscale Transformer Output A (815)). FIG. 8 depicts Greyscale Transformer Output A (815) resulting from applying the greyscale transformer (710) to Display Data A (510). As seen, Greyscale Transformer Output A (815) no longer contains any cross-hatching indicating that the data is greyscale (*i.e.,* does not have a colored portion). The greyscale transformer output (*e.g.,* Greyscale Transformer Output A (815)) is then processed with the edge filter (720). The output of the edge filter (720) is referred to as the edge filter output (*e.g.,* Edge Filter Output A (825)). The edge filter output is processed with the morphological filter (730). The output of the morphological filter (730) is referred to as the morphological filter output (*e.g.,* Morphological Filter Output A (835)). In the example of FIG. 8, the morphological filter (730) includes a dilation operation. Finally, in the image processing system (320), the morphological filter output is processed with the contour extractor (740) that returns the set of contours (*e.g.,* Set of Contours A (830)). As seen in the example of FIG. 8, the Set of Contours A (830) includes four contours, namely, a first contour (802), a second contour (804), a third contour (806), and a fourth contour (808). The contours are related to bounding boxes, and thus content objects, using the correspondence system (330).

Returning to FIG. 4, the correspondence system (330) receives the set of bounding boxes (420) generated by the artificial intelligence detection model (310) and the set of contours (430) produced by the image processing system (320), where both the artificial intelligence detection model (310) and image processing system (320) operate, independently, on the display data (410). The correspondence system (330) compares the set of bounding boxes (420) and the set of contours (430) to determined corresponding pairs, where each pair consists of one bounding box and one contour. Once paired, the contour, determined with the image processing system (320), is the content boundary of the content object detected by artificial intelligence detection model (310). As an example, the set of bounding boxes can include a first bounding box and a second bounding box. Similarly, the set of contours can include a first contour and a second contour. The correspondence system (330) may determine that the first bounding box corresponds to the first contour forming a first pair. Continuing with this example, the correspondence system (330) may further determine that the second bounding box does not correspond to the second contour, thus, the second bounding box and the second contour do not form a pair. The pair(s) of bounding boxes and contours are used to form the content boundaries (340). In general, a given content boundary is determined based on its associated contour. In one or more embodiments, the content boundary of a content object is set to the contour of a bounding box-contour pair, where the bounding box is associated with the content object. That is, a bounding box is related to a content object and the content boundary of that content object is the contour that is paired with the bounding box by the correspondence system (330). In other embodiments, the content boundary is a weighted average of a paired bounding box and contour. In some implementations, the weight(s) used in the weighted average are based on a confidence level or uncertainty associated with one or more of the bounding box and contour. For example, the artificial intelligence detection model (310) can further be configured to output a confidence or uncertainty that a bounding box strictly conforms to a detected content object. Then, the confidence or uncertainty can be used to weight the aggregation of a paired bounding box and contour when forming the content boundary.

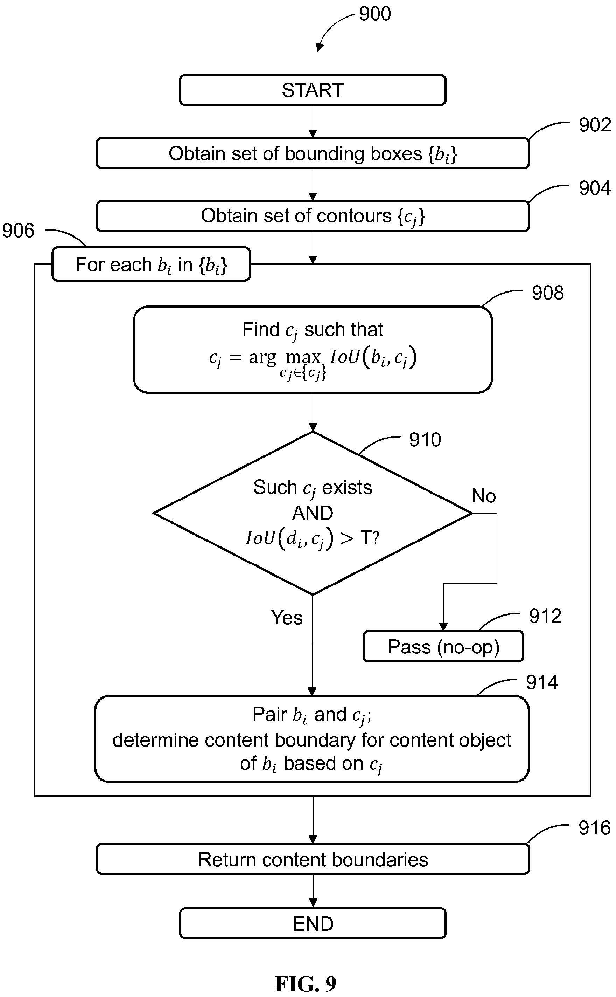

FIG. 9 depicts a flowchart (900). In accordance with one or more embodiments, the correspondence system (330) implements the flowchart (900) of FIG. 9 to determine corresponding contours and bounding boxes. As depicted in FIG. 9, in Block 902 the set of bounding boxes (e.g., Set of Bounding Boxes A (520)) is obtained by the correspondence system (330). Using mathematical notation, the set of bounding boxes is represented as $\{b_i\}$ where i is used to index a bounding box in the set. For example, if the set of bounding boxes contains three bounding boxes then these bounding boxes can be individually referenced as $b_1$, $b_2$, and $b_3$.

In Block 904 the set of contours (e.g., Set of Contours A (830)) is obtained by the correspondence system (330). Using mathematical notation, the set of contours is represented as $\{c_j\}$ where j is used to index a contour in the set. For example, if the set of contours contains four contours then these contours can be individually referenced as $c_1$, $c_2$, $c_3$, and $c_4$.

Continuing with FIG. 9, Block 906 encloses Blocks 908 to 914 and indicates that the enclosed Blocks are applied to each bounding box in the set of bounding boxes, $\{b_i\}$ (e.g., Set of Bounding Boxes A (520)). In some embodiments, Block 906 is executed sequentially or iteratively by cycling through the set of bounding boxes, $\{b_i\}$. In other embodiments, Block 906, or rather its enclosed Blocks, is executed in parallel. Alternatively, Block 906 can be adapted to "For each $c_j$ in $\{c_j\}$" indicating that the enclosed Blocks are applied to each contour in the set of contours, $\{c_j\}$. This alternative embodiment requires an adaptation to Block 908, explained below.

In Block 908, the contours from the set of contours, $\{c_j\}$, are compared to a given bounding box $b_i$ to determine whether the contour corresponds with the given bounding box. In accordance with one or embodiments, in Block 908 a correspondence score is calculated for every contour in the set of contours, $\{c_j\}$, with respect to the given bounding box, $b_i$, using a similarity function. That is, a correspondence score, $s_{i,j}$, is determined where $s_{i,j}$ indicates the correspondence between the $i^{th}$ bounding box and the $j^{th}$ contour. In one or more embodiments, the similarity function is the intersection over union (IoU) function. The IoU function is the ratio of the intersection and union of two shapes. In the context of the instant disclosure, the two shapes are the $i^{th}$ bounding box and the $j^{th}$ contour. In Block 908, the contour, $c_j$, with the highest correspondence score to the given bounding box $b_i$, according to the similarity function, is identified or found if such a highest correspondence score exists.

In FIG. 9, Block 908 specifies that for a given bounding box $b_i$, the contour $c_j$ from the set of contours, $\{c_j\}$, with the maximum intersection over union is found. Mathematically, this is written as

$$c_j = \arg \max_{c_j \in \{c_j\}} IoU\big(b_i, c_j\big).$$

EQ. 1

In some instances, more than one contour from the set of contours has the same maximum correspondence score. Such cases may be resolved in a variety of ways as selected by a user. For example, in instances where more than one contour share the highest correspondence score, the first contour can be returned, no contours can be returned, or correspondence scores of the more than one contour that share the highest correspondence score with a given bounding box, $b_i$, can be computed with respect to the other bounding boxes in the set of bounding boxes, if any, to determine which contour should be returned.

In the alternative embodiment, where Block 906 indicates an operation over the contours in the set of contours, Block 908 is adapted to identify the bounding box $b_i$ from the set of bounding boxes, with the maximum correspondence score according to a given similarity function. For example, using the *IoU* function as the similarity function, Block 908 can be expressed mathematically as

$$b_i = \arg \max_{b_i \in \{b_i\}} IoU\big(b_i, c_j\big).$$

EQ. 2

In Block 910, two conditions are checked. A first condition is checked to ensure that a contour from the set of contours, that when evaluated with the given bounding box $b_i$ with a similarity function, produces a maximum correspondence score. That is, the first condition checks that Block 908 has produced a valid output (has found a contour from the set of contours). Block 908 writes this condition as "Such $c_j$ exists" in reference to whether a contour, $c_j$, was determined in and output by Block 908. The second condition checks that the correspondence score between the given bounding box $b_i$ and identified or found contour $c_j$ *(i.e.,* the contour from the set of contours with the highest correspondence score with the given bounding box) exceeds a threshold, T. In one or more embodiments, the similarity function is the *IoU* function and the correspondence score is the intersection over union of the given bounding box and found contour. In one or embodiments that use the *IoU* function as the similarity function to determine the correspondence score, the threshold is set to 0.80. Block 910 depicts the second condition as the intersection over union of the given bounding box $b_i$ and the found contour $c_j$ exceeding a threshold, T. If at least one of the first and second conditions is not satisfied in Block 910, the flowchart (900) proceeds to Block 912. Block 912 represents a "Pass," null, or no-operation ("no-op") such that no operation is performed. From Block 912, the flowchart (900) can revert back to Block 908 if additional bounding boxes require evaluation according to Block 906 or can proceed to Block 916 if all bounding boxes in the set of bounding boxes, $\{b_i\}$, have been evaluated. If both the first and second conditions of Block 910 are satisfied, the flowchart (900) proceeds to Block 914. In Block 914, the given bounding box $b_i$ and the found contour $c_j$ are paired. Further, the content boundary for the content object detected by the given bounding box $b_i$ is determined based on the found contour $c_j$. In one or more embodiments, the found contour $c_j$ is determined to be the boundary of the content object detected by the given bounding box $b_i$. That is, in these embodiments, the content boundary for the content object associated with the given bounding box $b_i$ is set to the found contour $c_j$. In other embodiments, the content boundary may be determined based the found contour $c_j$, for example, as an average or weighted average of the given bounding box $b_i$ and the found contour $c_j$. In one or more embodiments, in Block 914, determined content boundary *(e.g.,* the found contour $c_j$) is added to, or included in, the content boundaries (450) determined by the content boundary determination system (300). In Block 916, the content boundaries are returned.

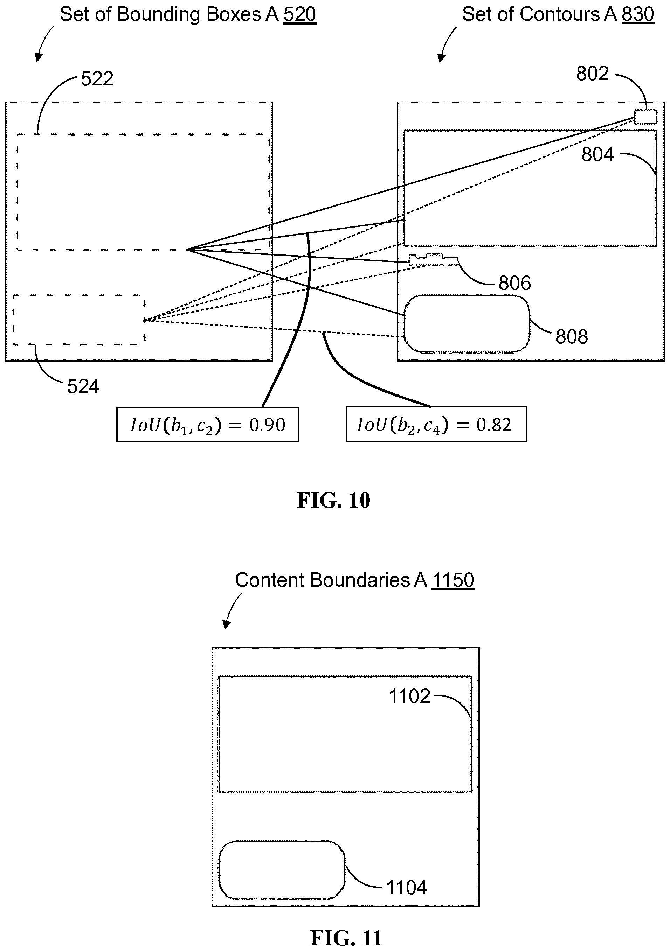

Using the ongoing example of the instant disclosure, FIG. 10 depicts various steps of the flowchart (900) or processes of the correspondence system (330) applied to the Set of Bounding Boxes A (520) and Set of Contours A (830) previously determined based on Display Data A (510). FIG. 10 depicts the Set of Bounding Boxes A (520) with the first bounding box (522), $b_1$, and the second bounding box (524), $b_2$. Thus, the Set of Bounding Boxes A (520) can be represented as $\{b_i\}_{i=1}^2$. FIG. 10 also depicts the Set of Contours A (830) with the first contour (802), $c_1$, the second contour (804), $c_2$, the third contour (806), $c_3$, and the fourth contour (808), $c_4$. Thus, the Set of Contours A (830) can be represented as $\{c_j\}_{j=1}^4$. As such, FIG. 10 depicts that the set of bounding boxes and the set of contours have been obtained in accordance with Blocks 902 and 904 of FIG. 9, respectively.

In FIG. 10, solid lines extend between the first bounding box (522) and all of the contours in the Set of Contours A (830). The solid lines represent the determination of a correspondence score between the first bounding box (522), $b_1$, and the contours in the Set of Contours A (830). Using the *IoU* function as the similarity function, the second contour (804), $c_2$, is found to have the highest correspondence score with the first bounding box (522), $b_1$, with a correspondence score of 0.90. In fact, the intersection over union of the first bounding box (522), $b_1$, and the remaining contours in the Set of Contours A (830) is 0.0. This represents Block 908 of FIG. 9, where *i* = 1 for Block 906. Having found a contour (the second contour (804), $c_2$) that has the highest correspondence score for the first bounding box (522), $b_1$, the first condition of Block 910 is satisfied. The second condition of Block 910 compares the correspondence score of the first bounding box (522), $b_1$, and the second contour (804), $c_2$, to a predefined threshold, T. For the present example, the predefined threshold is stated to be 0.80. Further, in the example of FIG. 10, the correspondence score of the first bounding box (522), $b_1$, and the second contour (804), $c_2$, is 0.90. Thus, in the example of FIG. 10, the first and second conditions of Block 910 of FIG. 9 are satisfied by the first bounding box (522), $b_1$, and the second contour (804), $c_2$, such the first bounding box (522), $b_1$, and the second contour (804), $c_2$, are said to form a pair according to Block 914 of FIG. 9. Further, the second contour (804), $c_2$, is identified as a content boundary and added to, or included in, the content boundaries (450) to be output by the content boundary determination system (300).

Dashed lines extend between the second bounding box (524) and all of the contours in the Set of Contours A (830). The dashed lines represent the determination of a correspondence score between the second bounding box (524), $b_2$, and the contours in the Set of Contours A (830). Using the *IoU* function as the similarity function, the fourth contour (808), $c_4$, is found to have the highest correspondence score with the second bounding box (524), $b_2$, with a correspondence score of 0.82. In fact, the intersection over union of the second bounding box (524), $b_2$, and the remaining contours in the Set of Contours A (830) is 0.0. This represents Block 908 of FIG. 9, where $i = 2$ for Block 906. Having found a contour (the fourth contour (808), $c_4$) that has the highest correspondence score for the second bounding box (524), $b_2$, the first condition of Block 910 is satisfied. The second condition of Block 910 compares the correspondence score of the second bounding box (524), $b_2$, and the fourth contour (808), $c_4$, to a predefined threshold, T. For the present example, the predefined threshold is stated to be 0.80. Further, in the example of FIG. 10, the correspondence score of the second bounding box (524), $b_2$, and the fourth contour (808), $c_4$, is 0.82. Thus, in the example of FIG. 10, the first and second conditions of Block 910 of FIG. 9 are satisfied by the second bounding box (524), $b_2$, and the fourth contour (808), $c_4$, such the second bounding box (524), $b_2$, and the fourth contour (808), $c_4$, are said to form a pair according to Block 914 of FIG. 9. Further, the fourth contour (808), $c_4$, is identified as a content boundary and added to, or included in, the content boundaries (450) to be output by the content boundary determination system (300).

Continuing with the ongoing example of the instant disclosure, FIG. 11 depicts the content boundaries (Content Boundaries A (1150)) returned by the correspondence system (330) according to Block 916 of FIG. 9, where the content boundary determination system (300) has been applied to Display Data A (510). As seen in FIG. 11, two content boundaries are included in Content Boundaries A (1150), namely, a first content boundary (1102) and a second content boundary (1104). These content boundaries are determined based on their associated contours. In the present example, the content boundaries are set to their respective contours. That is, the first content boundary (1102) is the second contour (804), $c_2$, of the Set of Contours A (830) having been paired with the first bounding box (522), $b_1$, of the Set of Bounding Boxes A (520) by the correspondence system (330). Further, the first bounding box (522), $b_1$, detected the first image (512) (or first content object) in Display Data A (510) such that the first content boundary (1102) is for the first image (512). The second content boundary (1104) is the fourth contour (808), $c_4$, of the Set of Contours A (830) having been paired with the second bounding box (524), $b_2$, of the Set of Bounding Boxes A (520) by the correspondence system (330). Further, the second bounding box (524), $b_2$, detected the second image (514) (or second content object) in Display Data A (510) such that the second content boundary (1104) is for the second image (514).

In review, the content boundary determination system (300) includes an artificial intelligence detection model (310), an image processing system (320), and a correspondence system (330). The artificial intelligence detection model (310) and the image processing system (320) each, independently, process display data (*i.e.,* what is rendered or to be rendered to a display) and return area representations (*i.e.,* regions of the display) thought to correspond to content objects. Specifically, the artificial intelligence detection model (310) returns a set of bounding boxes where each bounding box in the set of bounding boxes relates to a content object detected by the artificial intelligence detection model (310) and the image processing system (320) returns a set of contours. The correspondence system (330) processes the set of bounding boxes and the set of contours to determine one or more content boundaries ("content boundaries"), where a content boundary represents the actual area or boundary of a detected content object.

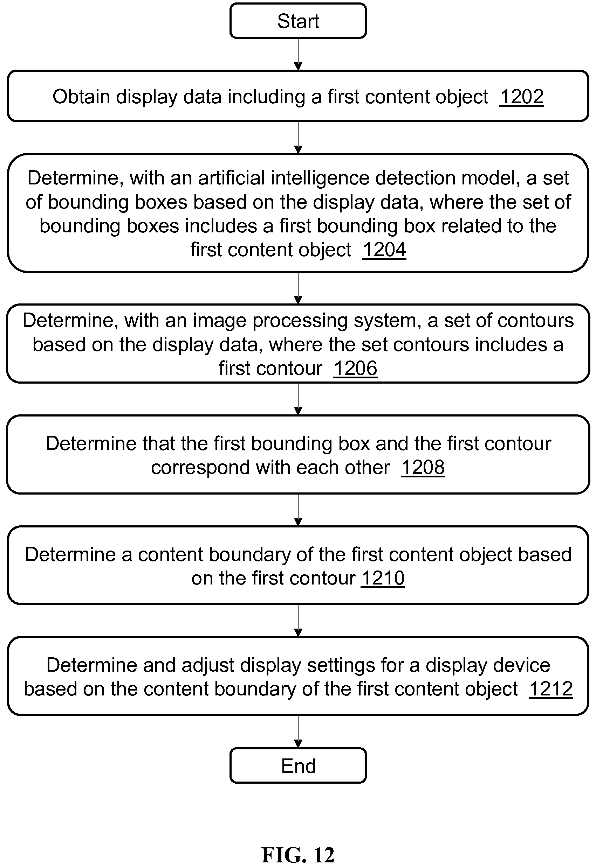

FIG. 12 depicts a method in accordance with one or more embodiments. The steps of the method of FIG. 12 can be performed using a content boundary determination system (300), computer system, or combination thereof, as previously described. As depicted, in Step 1202, display data including a first content object is obtained. Under one viewpoint, the display data is what is rendered, or to be rendered, to a display. The display can be part of a display device. Further, the display may be adjustable, *e.g.,* to selectively change the resolution, bit depth, color mode, *etc.* of regions of the display.

In Step 1204, the display data is processed with an artificial intelligence detection model to detect content objects in the display data. The artificial intelligence detection model returns a set of bounding boxing, where a given bounding box represents a portion of the display related to a detected content object. The set of bounding boxes determined with the artificial intelligence detection model includes a first bounding box related to the first content object. In some embodiments, the artificial intelligence detection model is configured to detect content objects of a specified type such as content objects have a content type of an image. Thus, in these embodiments, the set of bounding boxes includes only bounding boxes for content objects of the specified type (*e.g.,* images).

In Step 1206, the display data is processed with an image processing system to determine a set of contours. The set of contours includes a first contour. In accordance with one or more embodiments, the image processing system applies a sequence of computer vision filters or functions to the display data where a final or terminating function extracts contours from the processed data.

In Step 1208, the first bounding box and first contour are determined to correspond with each other. In one or more embodiments, correspondence between first bounding box and the first contour is determined with a correspondence system. The correspondence system calculates a correspondence score between the first bounding box and the first contour and determines that the first bounding box and first contour correspond with each other in response the correspondence score exceeding a threshold. The correspondence score can be the output of a similarity function, *e.g.,* the intersection over union (*IoU*) function.

In Step 1210, having determined that the first contour corresponds with the first bounding box in Step 1208, the content boundary for the first content object is determined based on the first contour. In one or more embodiments, the first contour is determined to be the content boundary of the first content object. That is, a content boundary of the first content object is set to the first contour.

In Step 1212, display settings for a display device are determined based on the content boundary of the first object. Further, in one or more embodiments, the display settings of the display device are adjusted to the determined display settings.

Embodiments of the instant disclosure include an artificial intelligence detection model (310). Artificial intelligence, broadly defined, includes the extraction and modeled use of patterns and insights from data. Thus, in some implementations, an artificial intelligence detection model determines a result such as a bounding box based on a perceived pattern in received data, where the pattern or identification thereof was previously learned by the model using a set of training data. Various types of artificial intelligence models can be used as the artificial intelligence detection model (310) without departing from the scope of this disclosure.

One type of machine-learned model is a neural network. A neural network may be used as a subcomponent of a larger machine-learned model. The neural network can be depicted as a graph composed of nodes and edges. In general, the edges of a neural network are "directed" such and the neural network, borrowing from the language of graphs, can be categorized as a directed acyclic graph (DAG).

Nodes may be grouped to form layers. Edges may connect, or not connect, to any node(s) regardless of which layer the node(s) is in. That is, edges may form sparse and residual connections between nodes (*e.g.,* so-called "skip" connections). In instances where every node in a layer is connected to every node in an adjacent layer, the layer and the adjacent layer are said to be fully or densely connected.

A neural network will have at least two layers, namely, an "input layer" and an "output layer." Zero or more intermediate layers may reside between the input layer and the output layer. Commonly, an intermediate layer is referred to as a "hidden layer." Further, a neural network with at least one hidden layer may be described as a "deep" neural network or a "deep learning method." The output layer of a neural network can have more than one node. In instances where the output layer of a neural network has more than one node, the neural network may be referred to as a "multi-target" or "multi-output" network.

Further, each edge in a neural network is associated with a numerical value. The numerical value of an edge, or even the edge itself, is often referred to as a "weight" or a "parameter." As such, a neural network may be said to contain or be parametrized by a set of weights or parameters. The neural network is "trained" by assigning, through evaluation of a set of data commonly referred to as training data (described below), a numerical value to each trainable edge of the neural network. Here, the distinction "trainable edge" is introduced where a trainable edge is an edge in which its numerical value can be adjusted during the training routine. In general, non-trainable edges have numerical values but their values are determined using a different process than the training processing, for example, direct assignation by a user.

Similarly, nodes carry, pass, or temporarily store a numerical value and are further associated with an activation function. Activation functions are not limited to any functional class, but traditionally apply a function to the dot product of an array of values of nodes ("incoming nodes") that are connected, or directed to, the node where the activation function is to be applied ("activation node"), and an array of the weights or parameters of the edges that connect the incoming nodes to the activation node. Incoming nodes are those that, when viewed as a graph, have directed arrows that point to the activation node where the numerical value for the activation node is being computed. Some commonly used activation functions are the linear function $f(x) = x$, sigmoid function $f(x) = \frac{1}{1+e^{-x}}$, and rectified linear unit function $f(x) = \max(0, x)$, but other functions can be used without limitation. Every node in a neural network can have its own activation function that can be the same or different from the activation function of any other node.

When the neural network receives an input, the input is propagated through the network according to the activation functions of the nodes of the neural network and edge values of the neural network. As such, the numerical value of a node may change for each received input. Occasionally, nodes are assigned fixed numerical values, such as the value of 1, that are not affected by the input. Nodes with fixed numerical values (invariant to the input) are often referred to as "biases" or "bias nodes."

In some implementations, the neural network may contain specialized layers, such as a normalization layer, dropout layer, and concatenation layer. For concision, such layers are not discussed herein, however, one with ordinary skill in the art will recognize that the inclusion and usage of such layers with the neural network do not exceed the scope of this disclosure.

As noted, the process of training the neural network consists of, at least, assigning values to the edges of the neural network. Training commences using a neural network with edge values initially provided through some initialization mechanism or procedure. The edge values may be assigned randomly, assigned according to a prescribed distribution, assigned manually, or by some other assignment procedure. With initial edge values, the neural network may be said to act as a function receiving and input and producing an output. As such, one or more inputs can be propagated through the neural network to produce one or more associated outputs. During training, a training set or training data is provided to the neural network. The training set is composed of inputs and associated target(s), where the target(s) represent a desired output, often an observed value or a "ground truth" that accompanies an observed input. During training, the neural network processes the inputs to produce outputs and the outputs are compared to the associated targets. The comparison of the neural network produced output to a target is performed using a "loss function" such as the mean squared error function, mean absolute error function, log-loss function (or binary cross-entropy function), *etc.* In general, the loss function provides a numerical evaluation of the similarity between the neural network output and the given target. In some implementations, the loss function may be composed of multiple loss functions applied to different portions of the output-target comparison. The loss function may also be constructed to impose additional constraints on the values assumed by the edges. For example, a loss function can include a regularization or penalty term for example, which may be physics-based, that affects or otherwise constrains the values of the edges. Overall, the goal of a training process is to alter the edge values such that an output of the neural network when processing a given input is similar to the target associated with the given input. In other words, the intent of training is to promote similarity between the neural network output and associated target(s) over the data set provided for training (*e.g.,* training data). Changes in the values of the edges are guided by the loss function, typically through a process called "backpropagation."

Backpropagation consists of computing the gradient of the loss function with respect to the values of the trainable edges. The gradient indicates a change in the edge values, that if applied to the edges, would result in the greatest change to the loss function with respect to training data provided when computing the gradient. The edge values are typically updated by a "step" in a direction according to the gradient. The step size is often referred to as the "learning rate" and need not remain fixed during the training process. Additionally, the step size update to the edge values may be informed by previously seen edge values or previously computed gradients.

Updates to the edge values of a neural network are applied iteratively. In other words, the training process consists of repeatedly computing the gradient of the loss function with respect to the edge values and updating the edge values with a step guided by the gradient. This process continues until a termination criterion is reached. For example, the termination criterion may consist of one or more of: reaching a fixed number of edge updates, otherwise known as an iteration counter; noting no appreciable change in the loss function between iterations (or the change to edge values between updates being less than a predefined threshold); and reaching a specified performance metric as evaluated on the training data or a separate hold-out data set. Once the termination criterion is satisfied, and the edge values are no longer intended to be updated, the neural network is said to be "trained." The loss function can be constructed so that similarity between outputs and targets is increased if the loss function is increased, such that the training process can be viewed as a maximization of the loss function. Similarly, the loss function can be constructed so that similarity between outputs and targets is increased if the loss function is decreased, such that the training process can be viewed as a minimization of the loss function. The tasks of maximization and minimization can be made equivalent through techniques such as negation.

A machine-learned model architecture defines the "structure" of the machine-learned model. For example, in the case of the neural network, the structure is specified by the number of hidden layers in the network, the type of activation function(s) used, and the number of outputs, among other things such as the use and location of specialized layers (*e.g.,* batch normalization layer). The architecture of a machine-learned model is specified by a set of "hyperparameters." For example, for the neural network, the number of hidden layers and the number of nodes in each layer are hyperparameters of the neural network.

Another type of machine-learned model is a convolutional neural network (CNN). Similar to a neural network a CNN can be thought of, or depicted as, being composed of a series of nodes connected by edges. However, it is more informative to view a CNN as structural groupings of weights; where here the term structural indicates that the weights within a group have a relationship. CNNs are widely applied when the input data also possesses a structural relationship, for example, a spatial relationship where one element of the input is always considered "to the left" of another element of the input. For example, display data composed of pixels can have a structural relationship as each pixel (element) has a directional relationship with respect to its adjacent pixels.

A structural grouping, or group, of weights is herein referred to as a "filter." In a CNN, the filters can be thought as "sliding" over, or convolving with, the input data to form an intermediate output or intermediate representation of the input data which still possesses a structural relationship. Like unto the neural network, the intermediate outputs are often further processed with an activation function. Many filters may be applied to the input data to form many intermediate representations. Additional filters may be formed to operate on the intermediate representations creating more intermediate representations. This process may be repeated as prescribed by a user. The filters, when convolving with an input, may move in strides such that some elements of the input *(e.g.,* pixels) are skipped. Groupings of the intermediate output representations may be pooled, for example, by considering only the maximum value of a group in subsequent calculations. Strides and pooling may be used to downsample the intermediate representations. Like unto the neural network, additional operations such as normalization, concatenation, dropout, and residual connections may be applied to the intermediate representations.

Like unto a neural network, a CNN is trained, after initialization of the filter weights, and the edge values of an includes neural network, if present, with the backpropagation process in accordance with a loss function.

In accordance with one or more embodiments, artificial intelligence detection model (310) disclosed herein is a CNN, or is based on a CNN. The You Only Look Once (YOLO) object detection model is based on a CNN. Thus, in one or more embodiments, the artificial intelligence detection model (310) is a version of the YOLO object detection model.

Embodiments of the disclosure have one or more of the following advantages. Embodiments of the disclosure may provide real-time and highly accurate content boundaries of content objects rendered, or to be rendered, on a display. Accurate determination of content boundaries reduces artifacts and defects in the display. Further, accurate determination of content boundaries enables or improves adjustment of display settings related to the display. For example, a display device including the display may adjust display settings of the display based on the content objects. Adjustment of display settings based on content objects can be beneficial for one or more of the following reasons: to selectively enhance display resolution based on the location of a content object; to reduce power consumption of the display *(e.g.,* preserve battery life of display device); to selectively alter the bit depth of pixels; to reduce latency *(e.g.,* for movies); *etc.* Thus, embodiments of the disclosure allow for display settings to be adjusted based on the content objects, and more specifically, the type and location of each content object. Other adjustments of the display settings of a display device can be made based on the rendered, or to be rendered, content objects of the display data without departing from the scope of the instant disclosure. For example, areas of the display pertaining to a detected contact object *(e.g.,* an image) can be enhanced using a super resolution technique or method.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A method for content boundary detection, comprising:

   obtaining display data comprising a first content object;
   determining, with an artificial intelligence detection model configured to detect content objects based on the display data, a set of bounding boxes based on the display data, wherein the set of bounding boxes comprises a first bounding box related to the first content object;
   determining, with an image processing system comprising one or more computer vision filters or functions that transform the display data, a set of contours based on the display data, wherein the set of contours comprises a first contour;
   calculating a correspondence score for the first bounding box and the first contour;
   determining that the first bounding box and the first contour correspond with each other based on the correspondence score;
   determining a content boundary of the first content object based on the first contour; and
   adjusting display settings of a display device configured to display the display data based on the content boundary of the first content object.

2. The method according to claim 1, further comprising displaying the display data with the display device.

3. The method according to claim 1, wherein:

   the display data further comprises a second content object,
   the set of bounding boxes further comprises a second bounding box related to the second content object,
   the set of contours further comprises a second contour, and
   the method further comprises:

calculating another correspondence score for the second bounding box and the second contour;

determining that the second bounding box and the second contour correspond with each other based on the another correspondence score; and

determining a content boundary of the second content object based on the second contour.

4. The method according to claim 1, wherein:

the first content object has a first content type, and

the artificial intelligence detection model is configured to detect content in the display data having the first content type.

5. The method according to claim 4, wherein the first content type is an image.

6. The method according to claim 1, wherein the artificial intelligence detection model comprises a convolutional neural network.

7. The method according to claim 1, wherein the one or more computer vision filters or functions are ordered forming an ordered set, optionally wherein determining the set of contours comprises applying the ordered set to the display data, and optionally wherein the ordered set comprises: a grayscale transformer; an edge filter; a morphological filter; and a contour extractor.

8. The method according to claim 1, wherein determining that the first bounding box and the first contour correspond with each other comprises:

determining that the correspondence score for the first bounding box and the first contour is greater than any other correspondence score for the first bounding box and any other contour in the set of contours; and

determining that the correspondence score exceeds a threshold.

9. The method according to claim 1, wherein the correspondence score comprises an intersection over union of the first bounding box and the first contour.

10. A computer system, comprising:

an artificial intelligence detection model configured to receive display data, detect content objects in the display data, and output a set of bounding boxes;

an image processing system configured to receive the display data and output a set of contours, the image processing system comprising one or more computer vision filters or functions that transform the display data; and

a correspondence system configured to determine one or more correspondences between the set of bounding boxes and the set of contours,

wherein the computer system is configured to:

obtain the display data comprising a first content object,

determine, with the artificial intelligence detection model, the set of bounding boxes based on the display data, wherein the set of bounding boxes comprises a first bounding box related to the first content object,

determine, with the image processing system, the set of contours based on the display data, wherein the set contours comprises a first contour,

calculate a correspondence score for the first bounding box and the first contour,

determine, with the correspondence system, that the first bounding box and the first contour correspond with each other based on the correspondence score,

determine a content boundary of the first content object based on the first contour, and

adjust display settings of a display device configured to display the display data based on the content boundary of the first content object.

11. The computer system according to claim 10, wherein the computer system is further configured to:
display the display data with the display device.

12. The computer system according to claim 10, wherein:

the first content object has a first content type, and

the artificial intelligence detection model is further configured to detect content in the display data having the first content type.

13. The computer system according to claim 12, wherein the first content type is an image.

14. The computer system according to claim 10, wherein the one or more computer vision filters or functions are ordered forming an ordered set, optionally wherein determining the set of contours comprises applying the ordered set to the display data optionally wherein the ordered set comprises: a grayscale transformer; an edge filter; a morphological filter; and a contour extractor.

15. The computer system according to claim 10, wherein determining, with the correspondence system that the first bounding box and the first contour correspond with each other comprises:

determining that the correspondence score for the first bounding box and the first contour is greater than any other correspondence score for the first bounding box and any other contour in the set of contours, and

determining that the correspondence score exceeds a threshold.

**FIG. 1**

**FIG. 2**

Content Boundary Determination System 300

Artificial Intelligence
Detection Model 310

Correspondence System
330

Image Processing
System 320

Computer Vision
Filter(s)/Function(s)
325

305

340

**FIG. 3**

Content Boundary Determination System 300

Display Data
410

Artificial Intelligence
Detection Model 310

Content Type 415

Image Processing
System 320

Computer Vision
Filter(s)/Function(s)
325

Set of Bounding Boxes
420

Set of Contours
430

Correspondence System
330

Content
Boundaries 450

**FIG. 4**

News

**Politics** Speaker gains support at national convention.

**Cars:** Manufacturer recalls millions of vehicles.

512

514

515

Display Data A
510

Artificial Intelligence Detection
Model 310

Content Type 415 = Image

Set of Bounding
Boxes A 520

522

524

**FIG. 5**

612

522

614

524

**FIG. 6**

Display Data
410

Image Processing System 320

Computer Vision
Filter(s)/Function(s) 325

Grayscale Transformer 710

Edge Filter 720

Morphological Filter 730

Contour Extractor 740

Set of Contours
430

**FIG. 7**

News

Politics Speaker gains support at national convention.

Cars: Manufacturer recalls millions of vehicles.

14

512

815

News

Politics Speaker gains support at national convention.

Cars: Manufacturer recalls millions of vehicles.

Display Data A
510

Image Processing System 320

CV Filter(s)/Function(s) 325

Grayscale Transformer 710

Edge Filter 720

Morphological Filter 730

Contour Extractor 740

825

Set of Contours A 830

802

804

806

808

835

FIG. 8

20

900

START

Obtain set of bounding boxes $\{b_i\}$ — 902

Obtain set of contours $\{c_j\}$ — 904

906 —— For each $b_i$ in $\{b_i\}$

Find $c_j$ such that
$$c_j = \arg \max_{c_j \in \{c_j\}} IoU(b_i, c_j)$$
— 908

Such $c_j$ exists
AND
$IoU(d_i, c_j) > T$? — 910

No

Yes

Pass (no-op) — 912

Pair $b_i$ and $c_j$;
determine content boundary for content object
of $b_i$ based on $c_j$ — 914

Return content boundaries — 916

END

**FIG. 9**

Set of Bounding Boxes A 520

Set of Contours A 830

522

524

802

804

806

808

$$IoU(b_1, c_2) = 0.90$$

$$IoU(b_2, c_4) = 0.82$$

**FIG. 10**

Content Boundaries A 1150

1102

1104

**FIG. 11**

```
┌─────────────────┐
│      Start      │
└─────────────────┘
         │
         ▼
┌──────────────────────────────────────────────────────┐
│ Obtain display data including a first content object 1202 │
└──────────────────────────────────────────────────────┘
         │
         ▼
┌──────────────────────────────────────────────────────┐
│ Determine, with an artificial intelligence detection model, a set │
│ of bounding boxes based on the display data, where the set of │
│ bounding boxes includes a first bounding box related to the │
│ first content object  1204 │
└──────────────────────────────────────────────────────┘
         │
         ▼
┌──────────────────────────────────────────────────────┐
│ Determine, with an image processing system, a set of contours │
│ based on the display data, where the set contours includes a │
│ first contour  1206 │
└──────────────────────────────────────────────────────┘
         │
         ▼
┌──────────────────────────────────────────────────────┐
│ Determine that the first bounding box and the first contour │
│ correspond with each other  1208 │
└──────────────────────────────────────────────────────┘
         │
         ▼
┌──────────────────────────────────────────────────────┐
│ Determine a content boundary of the first content object based │
│ on the first contour 1210 │
└──────────────────────────────────────────────────────┘
         │
         ▼
┌──────────────────────────────────────────────────────┐
│ Determine and adjust display settings for a display device │
│ based on the content boundary of the first content object  1212 │
└──────────────────────────────────────────────────────┘
         │
         ▼
┌─────────────────┐
│       End       │
└─────────────────┘
```

**FIG. 12**

Europäisches
Patentamt

European
Patent Office

Office européen
des brevets

# EUROPEAN SEARCH REPORT

**Application Number**

EP 25 18 9878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/383032 A1 (GARG ANSHUL [IN]; KHEMKA VIKRAMADITYA [US] ET AL.) 1 December 2022 (2022-12-01) * paragraph [0001] - paragraph [0005] * * paragraph [0046] - paragraph [0068] * * paragraph [0098] - paragraph [0103] * ----- | 1-15 | INV. G06V10/82 G06V20/40 |
| | | | TECHNICAL FIELDS SEARCHED (IPC) |
| | | | G06V |

The present search report has been drawn up for all claims

| Place of search | Date of completion of the search | Examiner |
|---|---|---|
| The Hague | 21 November 2025 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9878

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | Publication date | Patent family member(s) | Publication date |
|---|---|---|---|
| US 2022383032 A1 | 01-12-2022 | US 2022383032 A1<br>US 2025061684 A1 | 01-12-2022<br>20-02-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SATOSHI SUZUKI** ; **KEIICHIA BE**. Topological structural analysis of digitized binary images by border following. *Computer Vision, Graphics, and Image Processing*, 1985, vol. 30 (1), ISSN 0734-189X, 32-46